**Europäisches Patentamt**

**European Patent Office**

**Office européen des brevets**

(19)

(11) Veröffentlichungsnummer : **0 454 696 B1**

(12)

# EUROPÄISCHE PATENTSCHRIFT

(45) Veröffentlichungstag der Patentschrift :
15.09.93 Patentblatt 93/37

(51) Int. Cl.$^5$ : **F02K 1/12**

(21) Anmeldenummer : **90901544.8**

(22) Anmeldetag : **16.01.90**

(86) Internationale Anmeldenummer :
**PCT/DE90/00020**

(87) Internationale Veröffentlichungsnummer :
**WO 90/08254 26.07.90 Gazette 90/17**

(54) **SCHUBDÜSE.**

(30) Priorität : **19.01.89 DE 3901487**

(43) Veröffentlichungstag der Anmeldung :
**06.11.91 Patentblatt 91/45**

(45) Bekanntmachung des Hinweises auf die
Patenterteilung :
**15.09.93 Patentblatt 93/37**

(84) Benannte Vertragsstaaten :
**BE DE FR GB IT SE**

(56) Entgegenhaltungen :
**DE-A- 2 711 936
FR-A- 1 588 791
GB-A- 1 550 633
GB-A- 2 098 280
US-A- 2 880 575
US-A- 2 969 189
US-A- 2 995 010
US-A- 3 792 815**

(73) Patentinhaber : **MTU MOTOREN- UND
TURBINEN-UNION MÜNCHEN GMBH
Postfach 50 06 40
D-80976 München (DE)**

(72) Erfinder : **ENDERLE, Heinrich
Tölzer Strasse 42
D-8038 Gröbenzell (DE)**
Erfinder : **HEYSE, Jörg
Finkenweg 11
D-7016 Gerlingen (DE)**
Erfinder : **GEIDEL, Helmut-Arnd
Wacholderweg 6
D-8047 Karlsfeld (DE)**

(74) Vertreter : **Baum, Wolfgang, Dipl.-Ing.
MTU MOTOREN- UND TURBINEN-UNION
MÜNCHEN GMBH, Postfach 50 06 40
D-80976 München (DE)**

EP 0 454 696 B1

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue Saint-Denis, 75001 PARIS

## Beschreibung

Die Erfindung bezieht sich auf eine Schubdüse nach dem Oberbegriff des Patentanspruchs 1.

In jüngster Zeit gewinnen u. a. kombinierte Turbinen-Staustrahltriebwerke wieder an Bedeutung, und zwar im Rahmen sogenannter "Hyperschall-Flugkonzepte" mit äußerst hohem Einsatzspektrum vom Start bis zur hohen Überschallgeschwindigkeit in großen Flughöhen (bis etwa 30km Höhe). Die "Hyperschall-Flugkonzepte" schließen dabei u.a. ein Weltraum-Fluggeräte-Konzept ein (Projekt "Sänger"), welches auf ein Zweistufenkonzept wie folgt hinausläuft. Die erste Stufe soll von einem nur innerhalb der Atmosphäre operierenden Fluggerät durchgeführt werden, während die zweite Stufe auf einem "huckepackartig" vom genannten Fluggerät mitgenommenen Nutzlastfluggerät basiert, das zwecks Weltraummissionen im oberen Bereich der Atmosphäre im Wege eines geeigneten Raketenantriebssystems die ihm zugewiesene Flugbahn eigenständig fortsetzt. Das für die erste Stufe zuständige Fluggerät ist demnach also rückkehrbar und wiederverwendbar und vollzieht Starts und Landungen wie ein herkömmliches Flugzeug.

Bei z.B. für ein derartiges Fluggerät einzusetzendes kombinierten Turbinen-Staustrahltriebwerken soll im allgemeinen etwa bei Erreichung einer Fluggeschwindigkeit von etwa Mach 3 das Turbinenstrahltriebwerk kontinuierlich ab- und der betreffende Staustrahlantrieb kontinuierlich eingeschaltet werden, um allein mit letzterem gewünschte hohe Überschall- bzw. Hyperschallgeschwindigkeiten bis zu Mach 4,5 oder gar darüber zu erreichen. Fluggeschwindigkeiten von etwa Mach 2 oder gar darüber können dabei im kombinierten Betrieb "Strahltriebwerk mit eingeschalteten Nachbrenner" erreicht werden; der dabei vorteilhaft dem Strahltriebwerksteil nachgeschaltete und gegebenenfalls in der Kombination aus Verdichter- bzw. Gebläseluft und Triebwerksabgas beaufschlagte Nachbrenner kann durch Zuschaltung weiterer Brennstoffeinspritzmittel nebst Flammstabilisatoren das Antriebssystem für den Staustrahlbetrieb ausbilden unter entsprechend bemessener ausschließlicher Umgebungsluftversorgung bei abgeschaltetem Turbinenstrahltriebwerksteil.

Mit Rücksicht auf die vorstehend genannten extrem unterschiedlichen Flug-, Leistungs- und Umgebungsbedingungen bereitet es Schwierigkeiten, eine Schubdüsenkonfiguration zu schaffen, mit der im wesentlichen folgende Kriterien wirtschaftlich und leistungsoptimal in Einklang miteinander zu bringen sind.

- Anpassung der Düsenhalsquerschnittsfläche (engster Querschnitt) an vorgegebene, gegebenenfalls extrem variable Massendurchsätze bei in der Düsenhalsquerschnittsebene einstellbarer Strömungsmachzahl ($M \infty$)=I. Diese Maßnahme ist bei variablen Massendurchsätzen nötig, um im Expansionsteil der Schubdüse stets die Entstehung einer Überschallströmung zu gewährleisten.
- Als Folge der Düsenverstellung gering zu haltende Strömungsenergie - bzw. aerodynamische Verluste; die erforderliche Variabilität des Düsenkonturverlaufs ist so zu gestalten, daß dieser keine Verdichtungsstöße in der Überschallströmung hervorruft.
- Insbesondere im Hinblick auf extrem unterschiedliche Flughöhen soll der Verlauf der Düsenströmung, und damit der Düsenaustrittsdruck an den jeweils aktuellen Umgebungszustand (Umgebungsdruck) schuboptimal angepaßt werden können.
- Möglichst geringer Verstellmittel- sowie Energieaufwand für die erforderlichen Konturverlaufsvariationen der Schubdüse.

Schon vorgeschlagene Schubdüsenkonzepte können insbesondere den Anforderungen der strömungsenergieverlustarmen Anpassung an ein extrem differierendes Spektrum von Umgebungsdrücken in Kombination mit einer extrem starken Düsenhalsquerschnittsvariation (engster Querschnitt- Variation bis zu 1:5 oder gar darüber) nicht oder nur äußerst unzureichend genüge leisten.

Hierzu wäre z.B. auf ein Schubdüsenkonzept zu verweisen, welches aus einem der Nach- und Zusatzverbrennungseinrichtung des kombinierten Turbinen-Staustrahltriebwerks in axialer Richtung achssymmetrisch nachgeschalteten, axial verschiebbaren pilzförmigen Zentralkörper besteht; dabei soll der Zentralkörper gegenüber einer zylindrischen, stationären, konvergent/divergent verlaufenden Außenkontur der Düse verfahrbar sein; dabei bildet der Zentralkörper einen extrem temperaturbelasteten, durchbrandgefährdeten aerodynamischen Störkörper aus. Ein insbesondere im Hinblick auf Nach- und Zusatzverbrennung (Staustrahlbetrieb) geforderter "freier" Heißgasmassendurchsatz kann so nicht gewährleistet werden.

Es wurde auch schon ein vergleichsweise komplexes klappenartiges Doppelschubdüsenkonzept vorgeschlagen im Hinblick auf ein Triebwerkskonzept, bei dem oberhalb einer abschaltbaren Strahltriebwerkseinheit mit Nachbrenner eine für sich einschaltbare Staustrahlbrennkammer mit eigener Schubdüse angeordnet sein soll. Eine kombinierte Schubdüsenverstellanforderung u.a. für Unterschall-, Überschall- und Hyperschallbetrieb bei einer nur einzigen Düse wird dabei nicht erfüllt. Letzteres gilt auch in Verbindung mit einer aus der DE-OS 31 21 653 bekannten Schubdüse, bei der zwischen axial triebwerkszellenseitig auskragenden, seitlich oben und unten offenen geraden Wänden jeweils einander gegenüberliegende, um Querachsen verschwenkbare Primärklappen vorgesehen sind, an deren äußeren Enden um weitere Drehachsen verschwenkbare freitragende Sekundärklappen den jeweils divergenten Endteil der Düse ausbilden. Die dabei einander gegenüberliegenden Primärklappen bilden gemeinsam im wesentlichen den konvergenten Düsenkonturverlauf einschließlich der jeweils engsten Stelle (Halsquerschnitt) aus. Dabei sind u.a. besondere außenseitig über die jeweiligen Primär- und Sekundärklappenpaarungen hinwegzuführende Abdeckklappen zwecks möglichst aerodynamisch flächendeckender Umgebungsluftführung erforderlich. Ferner soll im Wege variabler Verschwenkbarkeit der Düsenklappen eine Abgasabsperrung durch im wesentlichen achssymmetrisch flächendeckende Kontaktierung der Sekundärklappen (Schubumkehrbetrieb) oder eine Schubstrahlverschwenkung in einer vertikalen Ebene in Grenzen möglich sein. Ferner sollen die Primär- und Sekundärklappen über Torsionswellen - durch die Düsenseitenwandungen hindurchgeführt - verstellt werden können, was seitlich ausladende, aerodynamisch ungünstige Verstellmittelangriffspunkte und - anordnungen erfordert.

Ferner erfordert im bekannten Fall jede Primär- und Sekundärklappe der Schubdüse einen ihr eigenen Verstellantrieb. Aufgrund der im bekannten Fall gewählten Verstellkinemtik dürfte es ferner Schwierigkeiten bereiten, die auf die Primär- und Sekundärklappen einwirkenden Gaskräfte, insbesondere in Relation zu den äußeren Umgebungsdruckbedingungen, betriebssicher beherrschen zu können.

Die US-A- 2,889,576 (dem Oberbegriff des Patentanspruchs 1 als Stand der Technik zugrunde gelegt) behandelt eine Schubdüse für Gasturbinen-Strahltriebwerke mittels durch obere bzw. unere primäre und sekundäre Düsenklappen zwischen seitlichen Wandteilen eines oben und unter offen ausgebildeten Düsengehäuses veränderbarer Düsenkontur (Konvergenz, Divergenz bzw. Engstquerschnitt). Die Verstellung der Düsenklappen erfolgt im Zusammenwirken mit jeweils radial äußeren oberen und unteren Abdeckklappen, die, in Anpassung an vorgegebene mechanische Varationenen der konvergent/divergenten Innenkontur und des Engstquerschnitts, gegen die Außenluftströmung verfahrbare Brempsklappen ("Spoiler") sind. Die Hebelverstellkinematik und -anordnung soll hauptsächlich derart gestaltet sein, daß trotz unterschiedlich eingestellter Düsendivergenz bzw. Divergenz/Konvergenz und abweichendem Engstquerschnitt gestreckte Klappenlage, Engstquerschnitt und Austrittsquerschnitt maximal geöffnet) die Abdeckklappen einen möglichst mit geringen aerodynamischen Verlusten verbundenen Gehäuseverschluß ausbilden. Im bekannten Fall sind die Primärklappen zugleich (dünne) Abdeckelemente von mit Radialabstand zu diesen angeordneten und mit verschwenkbaren Hebeln. Hebel und Primärklappen sind durch einen eigenen Verstellantrieb über einen vorderen Drehzapfen an einem radial oberen Teil des Düsengehäuses verschwenkbar, um mit den Primärklappen (konvergenter Düsenteil) den jeweils engsten Querschnitt einzustellen. Bei einmal eingestelltem Engstquerschnitt soll dann die Düsendivergenz mittels der Sekundärklappen, von den Abdeckklappen ausgehend, gesondert justierbar sein. Es sind dabei die Abdeckklappen über einen eigenen Verstellantrieb um den Drehzapfen der Hebel verschwenkbar und ferner über beweglich gekoppelte Zwischenhebel mit dem Sekundärklappenende längsverschiebbar und winkelverstellbar gekoppelt. Mit einem stromaufwärtig zu einem inneren Drehpunkt symmetrisch gewölbten Klappenende sind die Sekundärklappen an den stromabwärtigen Enden der Hebel schwenkbar angelelenkt und dabei fallweise mehr oder weiniger in die Primärklappen einfahrbar. Eine telekopartige, federgestützte Hebelanordnung ist zwischen dem inneren Drehpunkt und dem jeweils hinteren Zwischenhebel vorgesehen; ein gehäuseseitig - in Nachbarschaft des Drehzapfens - abgestützter Schwenkhebel greift gelenkig an den vorderen Zwischenhebel an.

Wesentliche Nachteile des bekannten Falles:

Großer Klappenverstellmittelaufwand, insbesondere hinsichtlich kombinierter Düsen-Brems-Klappenverstellung; überwiegend einseitige Klappenabstützung am Gehäuse; besondere Verschlußanforderungen des Düsengehäuses, oben wie unten; festigkeitsmäßig "labile" Gehäuseausbildung, d.h., das Gehäuse bildet keinen in sich geschlossen "Druckbehälter" aus, so daß nicht unerhebliche Schwierigkeiten für die Erstellung einer druckentlasteten Klappenverstellung bestehen; insbesondere extem geringer Halsquerschnitt bei gleichzeitig verhältnismäßig großem Expansionswinkel (Sekundärklappen bei ausgeprägter Konvergenz) sind mit Gehäusefreilegung und Abbremsstellung ("Spoiler") verknüpft; pro Satz Primärklappen und Sekundärklappen wird ein doppelter Verstellanrieb benötigt; der Verstellantrieb erfolgt seitlich des Düsengehäuses, was sich u.a. ungünstig auf eine inQuerrichtung dicht gedrängte Beuanordnung mehrerer Triebwerke nebst Schubdüsen nebeneinander auswirkt; seitliche Gehäuseschwächung (Verstellantrieb); stromabwärtige Enden der Primärklappen definieren den jeweiligen Engstquerschnitt der Düse mit aerodynamisch ungünstigem Endkantenüberhang; es liegt keine festigkeitsmäßig eindeutige Verbindung "Hebel/Primärklappen" vor.

Die GB-A 2098 280 behandelt eine hinsichtlich ihrer wirksamen Düsenfläche variable, zweidimensionale, konvergent/divergente Schubdüse für Gasturbinentriebwerke. In einem viereckigen Abgasgehäuse angeordnet, besteht die konvergent/divergente Düse aus mit stationären oberen und utneren Wandteilen im Gehäuse zusammenwirkenden schwenkbar aneinander angelenkten oberen vordere und hinteren Klappen sowie einer unteren innenseitig konvergent/divergent geformten Einzelklappe 8. In Kombination aus kreisbogenförmig geführter Axialverschiebung der Einzelklappe und relativ dazu bzw. zur Düsenachse erfolgender Einknickbewe-

3

gung der oberen Klappen kann die Innenkontur der Düse in örtlicher axialer Verlagerung und Änderung des Engstquerschnittes variiert werden; dabei sind die obere vordere Klappe am vorderen Ende bzw. beide obere Klappen am gemeinsamen Schwenkanlenkpunkt entlang bogenförmiger Führungsbahnen am Gehäuse verfahrbar. In Kombination mit einer stromab, zusammen mit einer auffaltbaren Gabel, ausfahren Ablenkhutze für Strahlablenkung (Senkrecht- oder Kurzstart) soll die kleinste Düsenengfläche zwischen maximal ausgefahrener Einzelklappe (unten) und Hutze ausgebildet sein. Der Hutze, den beiden oberen Klappen und der Einzelklappe sind jeweils eigene Antriebsmittel zugeordndet. In variablen Düsenendstellung -ohne Strahlablenkung- bildet der innere Teil der auffaltbaren Gabel stets einen die hintere obere Klappe geometrisch fortsetzenden Expansionsabschnitt aus.

Aus der GB-A-15 50 633 ist eine Kombination aus einer konvergent/divergent einstellbaren Schubdüse mit einer stromab in den Gasstrom verfahrbaren Strahlumlenkhaube bekannt. Die Schubdüse besteht aus oberen am Gehäuse der kombinierten Einrichtung verstellweg-kompensatorisch gabelförmig ineinandergreifenden Primär- und Sekundärklappen und einer, radial unteren um eine einzige Drehachse verschwenkbaren Klappe. Am stromabwärtigen oberen Ende der Schubdüse ist eine Steuerklappe zur Steuerung des Düsenexpansionswinkels bzw. zur Beeinflussung der Abströmrichtung des Schubstrahls vorgesehen. Vorrangig behandlet der bekannte Fall eine gezielt über Ventile gesteuerte Kühlluftzufuhr zur Schubdüse, derart, daß mit Rücksicht auf insbesondere wahlweisen Marsch- oder V/STOL-Flugbetrieb und daraus resultierenden Druckschwankungen im Abgasstrahl eine bedarfsorientierte Kühlluftzufuhr unter Gewährleistung der örtlichen Druckdifferenzen für die Zufuhr (z.B. Aufprallkühlung) möglich sein soll. Im bekannten Fall ist zwischen den Primär- und Sekundärklappen und einem bogenartigen Außenteil des Düsengehäuses eine einzige Druckkammer für die zugeführte Kühlluft vorgesehen; diese Kammer soll über Öffnungen mit gehäuseseitig integrierten Kühlkanälen in Verbindung stehen.

Eine durch Klappen - zwischen Düsenaustritt und einer stationären Expansionsrampe am Fluggeräteheck - gesteuerte Zufuhr von Grenzschichtluft zwecks aerodynamischer Eingrenzung des Schubstrahls ist diesem bekannten Fall nicht entnehmbar.

Aus der US-A-2,995,010 ist es bekannt, bei einer Schubdüse für Gasturbinenstrahltriebwerke jeweils die Primärklappen mittels an diese in Querrichtung angreifender Verstellzylinder in Anpassung an verlangte Düsenkonvergenz und engsten Halsquerschnitt zu verschwenken; die Verstellzylinder sind am äußeren Ende schwenkbar an einer äußeren Tragstruktur verankert. Im übrigen setzt der bekannte Fall stets eine über einen 2-fachen Antrieb koordinierte, besondere Verstellhebelsteuerung bzw. doppelt angetriebene, einander überlagerte Verstellbeegung der Primär- und Sekundärklappen voraus und unter Anwendung eines elastisch verformbaren Abdeckringes als Abdichtmittel an der jeweils engsten bzw. Knickstelle zwischen beiden Klappensätzen.

Die FR-A-1588791 sieht eine aus keilförmig spitz endenen, axial verfahrbaren sowie um Querachsen verschwenkbaren Klappenelementen bestehende Sekundärschubdüse vor, die, bei konvergent/divergent eingestelltem Düsenkonturverlauf, über Primär- und Sekundärklappen, sich mit den radial inneren Keilflächen rampenartig erweitert an die stromabwärtigen Enden der Sekundärklappen im wesentlichen anschließt.

PB 81-979485 veranschaulicht ein aus Informationen einer örtlich gemessenen Druckdifferenz (Sensor) über eine elektronische Triebwerksregelung gesteuertes Ventil, das die Zufuhr und den Druck aus dem Kreisprozeß entnommener Druckluft in die bzw. in einer Druck-Kammer steuern soll, die zwischen inneren Klappenstrukturen (Primär- und Sekundärklappen) und äußeren Gehäusestrukturen ausgebildet ist.

Ein dem örtlich abgestuften Druckverlauf der Heißgasströmung angepaßtes Mehr-Kammer-System, mit an den empfindlichen Stellen (bewegliche Abdichtungen) örtlich angepaßt herrschenden Sperrluft-Differenzdrücken gegenüber der Heißgasströmung, ist dem bekannten Fall nicht entnehmbar.

Der Erfindung liegt die Aufgabe zugrunde, eine Schubdüse zu schaffen, die als Überschallexpansionsdüse über einen weiten Betriebsbereich eine aerodynamisch günstige Verstellung der Düsenhalsquerschnittsfläche erreichen läßt, ohne Verdichtungsstöße zu verursachen, wobei die Düsenströmung an einen großen Umgebungsdruckbereich (extrem verschiedene Flughöhen) schuboptimal angepaßt werden soll.

Bei einer Schubdüse nach der eingangs genannten Art (Oberbegriff des Patentanspruchs 1) ist die gestellte Aufgabe mit den Merkmalen des Kennzeichnungsteils des Patentanspruchs 1 erfindungsgemäß gelöst.

Vorteilhafte Ausgestaltungen der Erfindung ergeben sich aus den Merkmalen der Patentansprüche 2 bis 15.

Anhand der Zeichnungen ist die Erfindung beispielsweise weiter näher erläutert.

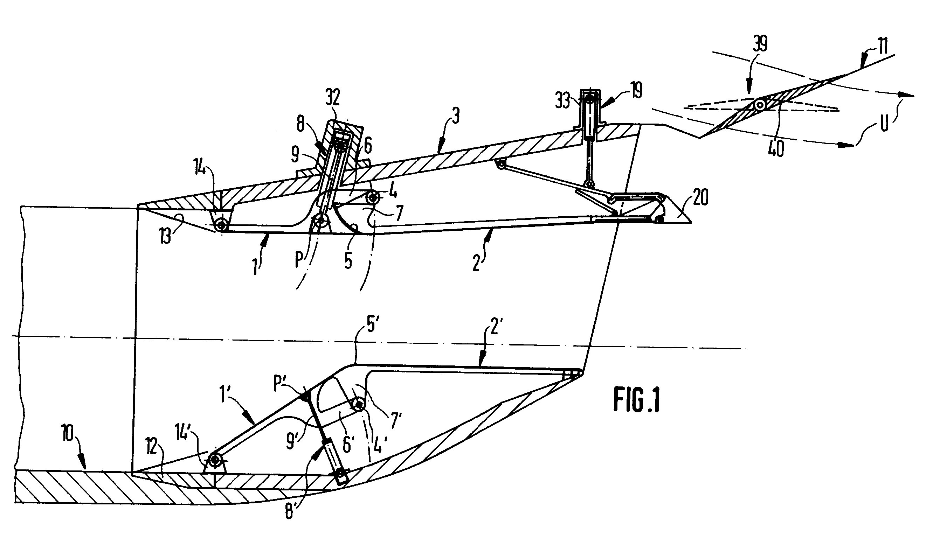

Darin verkörpert Fig. 1 eine im Mittellängsschnitt dargestellte, sich an ein Triebwerk, insbesondere an ein kombiniertes Turbinen-Staustrahltriebwerk anschließende Schubdüse in der Düsenstellung für den Startfall ohne Nachbrennerbetrieb. Es handelt sich dabei also um eine Schubdüse für variable Heißgasmassendurchsätze unter ganz besonders extrem unterschiedlichen Umgebungsdruckbedingungen, insbesondere um eine Überschallexpansionsdüse, die für variable Einsatzfälle, wie Unterschall-, Überschall- sowie Hyperschallgeschwindigkeitsbereich von Fluggeräten, gemäß eingangs beispielsweise umrissenen Kriterien bestens geeignet ist.

Bei dieser Schubdüse soll der variable Düsenkonturverlauf zwischen jeweils oberen und unteren Primär- und Sekundärklappen 1,2;1',2' ausgebildet werden, die an parallelen Wandflächen eines viereckigen Düsengehäuses 3 abdichtend beweglich geführt werden sollen. Eine derartige Schubdüse wird in der Praxis im allgemeinen auch als sogenannte "Rechteckschubdüse" bezeichnet. Bei der erfindungsgemäßen Schubdüse sind ferner die Primärklappen 1,1' jeweils stromaufwärtig, die Sekundärklappen 2,2' jeweils stromabwärtig am Düsengehäuse 3, hier oben bzw. unten, schwenkbar angelenkt. Genauer ausgedrückt, sind also die Primärklappen 1,1' über stationäre Drehpunkte am Düsengehäuse 3 schwenkbar aufgehängt; die Sekundärklappen 2,2' sind jeweils an deren stromabwärtigen Enden in später noch näher erläuterter Art winkelverstell- und beweglich verfahrbar am Düsengehäuse 3 aufgehängt bzw. angelenkt. Wie ferner aus Fig. 1 ersichtlich ist, sollen die Sekundärklappen 2,2' jeweils an von der Düsenströmung abgewandter Seite befindlichen Drehpunkten 4,4' der Primärklappen 1,1' schwenkbar angelenkt und mit zu diesen Drehpunkten 4,4' im wesentlichen konzentrischen Abschnitten 5,5' aerodynamisch flächendeckend in die Primärklappen 1,1' einfahrbar oder aus diesen ausfahrbar angeordnet sein.

Ferner sollen bei der vorstehend aufgezeigten und schon beschriebenen Schubdüse die genannten Drehpunkte 4,4' jeweils an den hinteren Enden kniehebelförmig abgebogener Innensektionen 6,6' der Primärklappen 1,1' angeordnet sein und die Innnensektionen 6,6' sollen konzentrisch zu den betreffenden Drehpunkten 4,4' ausgeschnitten sein.

Wie außerdem aus Fig. 1 unter anderem ersichtlich ist, sollen die Sekundärklappen 2,2' jeweils mittels am stromaufwärtigen Ende von den eine mehr oder weniger gewölbte Düsenflächeneinschnürung ausbildenden, gerundeten Flächenabschnitten 5,5' vorstehender Wandabschnitte 7,7' oder Laschen an den Primärklappen 1,1' zusammen mit letzteren verschwenkbar aufgehängt sein.

Aus Fig. 1 geht ferner hervor, daß die Schubdüse zwischen einer Nach - und gegebenenfalls einer Zusatzverbrennungseinrichtung (Staustrahlantrieb) enthaltenen Rohrkonfiguration 10 des kombinierten Turbinen- Staustrahltriebwerks und einer fluggeräteseitig integrierten, äußeren Expansionsrampe 11 (heckseitig) angeordnet sein soll.

Dabei weist gemäß Fig. 1 die Schubdüse einen Eintrittsabschnitt 12 auf, der ein die zylindrische Rohrkonfiguration 10 des Triebwerks in einen quadratischen oder rechteckigen Querschnitt umkonfigurierendes Übergangsteil zur Düse ausbildet. Das genannte Übergangsteil 12 kann ein in Richtung der Strömung vorzugsweise oben und unten konvergentes, hitzeschildartiges Einsatzteil 13 aufweisen, welches unter örtlicher Abschirmung der stromaufwärtigen Aufhängemittel 14,14' der betreffenden oberen und unteren Primärklappen 1,1' in Richtung auf deren vorderen Stirn- bzw. Eintrittskanten hin ausläuft.

Vorzugsweise können gemäß der Erfindung ferner die oberen und die unteren Primär- und Sekundärklappen 1,2 bzw. 1',2' jeweils durch ein ihnen eigenes Verstellsystem 8,8' unabhängig voneinander verschwenkt werden.

Gemäß Fig. 1 greift jedes Verstellsystem 8,8' an eine betreffende Primärklappe 1,1' drehbeweglich an; es wäre aber durchaus vorstellbar, die betreffenden Verstellsysteme 8,8' lediglich an die betreffenden Sekundärklappen 2,2' angreifen zu lassen.

Aus Fig. 1 ist ferner erkennbar, daß das jeweils betreffende Verstellsystem 8,8' zwischen einem oberen bzw. unteren Abschnitt des Düsengehäuses 3 und den betreffenden oberen bzw. unteren Primär- und Sekundärklappen 1,1' bzw. 2,2' angeordnet sein kann.

Das zuvor genannte jeweilige Verstellsystem 8,8' kann von hydraulisch oder pneumatisch betätigten Verstellzylindern gebildet werden, die in Querrichtung am oberen bzw. am unteren Abschnitt des Düsengehäuses 3 angeordnet sind und deren Kolbenstangen bzw. Hub-Zugstangen 9,9' z.B. gemäß Fig. 1 endseitig drehpunktförmig (P,P') an stromabwärtige Partien der jeweiligen Primärklappen 1,1' angreifen.

Erfindungsgemäß ist es dann weiter vorgesehen, daß das Düsengehäuse 3 im oberen Bereich, von der Eintritts- nach der Düsenaustrittsseite etwa in richtungsmäßiger Anpassung an den Übergang zur zuvor schon erwähnten Expansionsrampe 11 geneigt verlaufen soll; im unteren Bereich verläuft das Düsengehäuse von der Eintrittsseite aus zunächst im wesentlichen geradwandig bzw. düsenachsparallel, und dann, von unten außen nach oben innen in Richtung auf den Düsenaustritt eingewölbt, wobei das Düsengehäuse 3 damit einen Bestandteil des hinten unten liegenden Flugzeughecks ausbildet.

Erfindungsgemäß können ferner die unteren und/oder oberen Sekundärklappen 2',2 an ihren stromabwärtigen Enden winkelverstellbar und beweglich verfahrbar am Düsengehäuse 3 angeordnet sein.

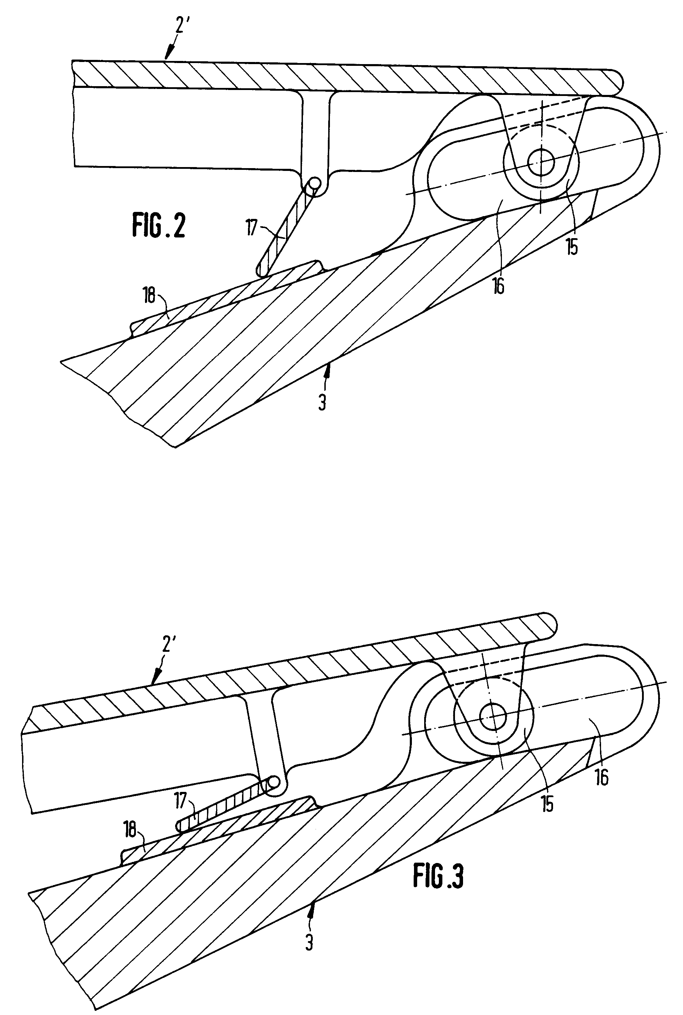

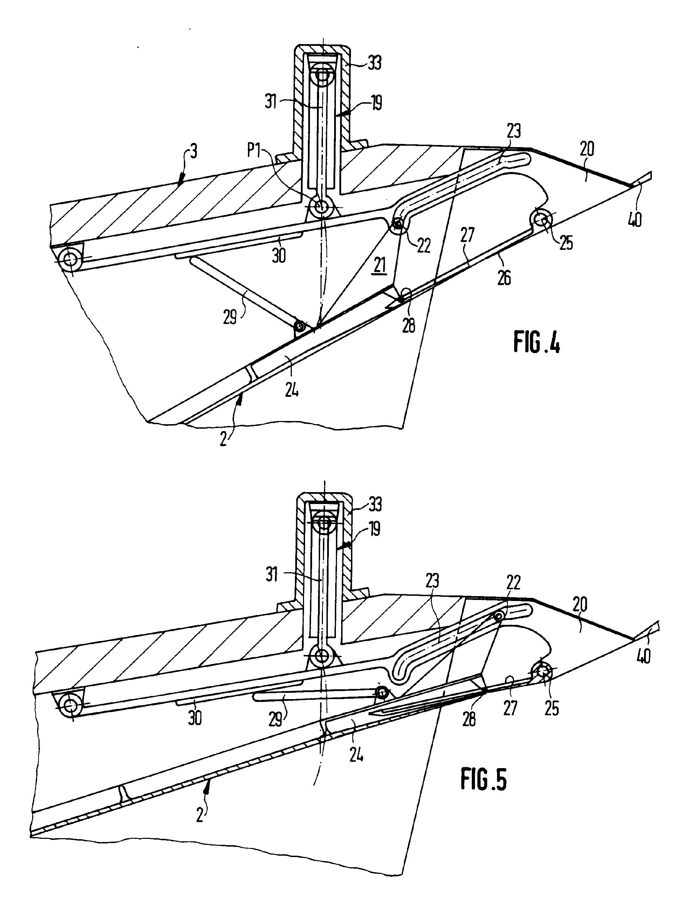

Als jeweils abgebrochen dargestellte Längs-mittelabschnitte aus Fig. 1 verkörpern die Fig. 2 und 3 das zuvor erwähnte Erfindungsmerkmal bezüglich der Winkelverstellbarkeit und der beweglichen Verfahrbarkeit am Düsengehäuse, hier bezüglich der unteren Sekundärklappen 2'. Aus Fig. 2 und 3 erkennt man, daß die unteren Sekundärklappen 2' mittels an deren stromabwärtigen Enden befindlicher Rollen 15 in kulissenartigen Führungsbahnen 16 des hier unteren Düsengehäuses 3 winkelverstellbar und beweglich verfahrbar angeordnet sind.

Wie ferner aus Fig. 2 und 3 ersichtlich ist, soll an der hier beispielsweise verdeutlichten untere Sekundärklappe 2', vor der genannten kulissenartigen Führungsbahn 16, eine Dichtplatte 17 beweglich angeordnet sein, die mit ihrem äußeren freien Ende gegenüber einer gehäusefesten Dichtauflage 18 einschwenkbar sowie in letzterer beweglich verfahrbar geführt sein soll.

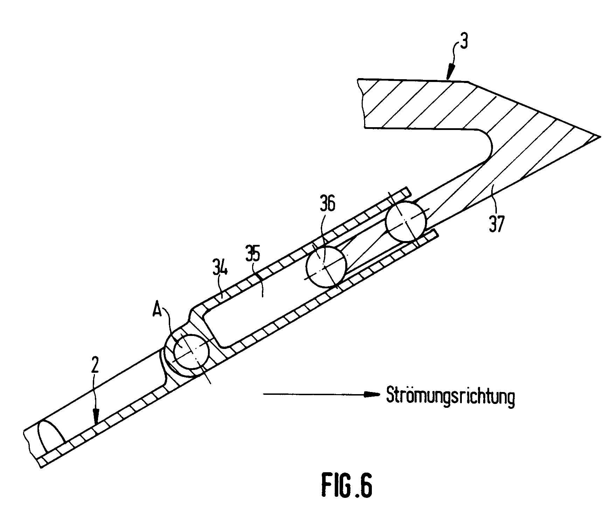

Die Fig. 4 und 5 verdeutlichen weitere Schubdüsenausschnitte der Fig. 1 und zwar betreffend hier beispielsweise eine winkelverstellbare sowie Axialverschiebungen kompensierende Führungsgehäuseeinrichtung 20, jeweils als Mittel-längsausschnitte dargestellt. Im Falle der Fig. 4 und 5 ist demnach die obere Sekundärklappe 2 am stromabwärtigen Ende an dem schon genannten, durch ein eigenes Verstellsystem 19 betätigbaren, am Düsengehäuse schwenkbar gelagerten Führungsgehäuse 20 axial verfahrbar sowie winkelverstellbar aufgehängt.

Dabei greift die betreffende obere Sekundärklappe 2 mittels an von der Heißgasseite abgewandten Seite herausragender, wandförmiger Halterungsmittel 21 über Rollen 22 in eine kulissenartige Führungsbahn 23 des Führungsgehäuses 20 ein und zwar winkelverstellbar sowie axial bewegungskompensatorisch verfahrbar. Demnach bildet also das Führungsgehäuse eine Einrichtung zur Verstell- bzw. Längenänderungskompensation aus. Hierzu ist weiter die obere Sekundärklappe 2 am stromabwärtigen Ende mit einer nach hinten offenen Aussparung 24 versehen; in diese Aussparung 24 soll ferner eine unterhalb der dortigen Führungsbahn 23 am Führungsgehäuse 20 um eine Achse 25 schwenkbare, das freie Klappenende überbrückende Hilfsklappe 26 mit zunehmender Expansionswinkelverringerung der Schubdüse zunehmend tiefer einfahrbar sein. Letzeres geht insbesondere aus Fig. 5 im Vergleich zu Fig.4 hervor.

Bei der Anordnung nach Fig. 4 und 5 kann ferner die Hilfsklappe 26 auf der vom Heißgas abgewandten Seite mit mindestens einer Führungsbahn 27 entlang am hinteren Ende der offenen Längsaussparung 24 gehalterter Rollen 28 beweglich angeordnet sein.

Aus Fig. 4 und 5 geht ferner hervor, daß die zuvor schon genannte obere Sekundärklappe 2 stromaufwärtig der Halterungsmittel 21 eine daran schwenkbar befestigte Dichtplatte 29 aufweisen kann; vorteilhaft kann diese Dichtplatte 29 mit ihrem äußeren Ende stets eine am Führungsgehäuse 20 angeordnete dichtplattenartige Auflage 30, unter örtlich darin integrierter Zwangsführung, abdichtend tangieren.

Gemäß Fig. 4 und 5 kann ferner ein gehäuseseitig, hier also beispielsweise in den oberen Abschnitt des Gehäuses 3 der Schubdüse integriertes Verstellsystem 19 vorgesehen sein, welches mittels mindestens eines zug- druckstangenartigen Verstellglieds 31 beweglich an das Führungsgehäuse 20 angreift und zwar im Punkte P1.

Wie in Fig. 1 bzw. 4 und 5 ferner grob schematisch verdeutlicht ist, können erfindungsgemäß ferner die Verstellsysteme, z.B. 8 oder 19, zumindest teilweise in außen vom Düsengehäuse 3 wartungsfreundlich zugänglichen und daran lösbar angeordneten hülsenartigen Gliedern 32,33 gelagert sein.

Fig. 6 verkörpert eine weiter Hilfsklappenvariante im Bezug auf Fig. 1, oben rechts gesehen, als mittellängsartiger Ausschnitt des betreffenden Düsengehäuses 3. Dabei ist hier am Ende der oberen Sekundärklappe 2 also die betreffende Hilfsklappe 34 um eine Querachse A verdrehbar angeordnet; die Hilfsklappe 34 ist dabei ferner als stromabwärtig offene Führungsbahn 35 ausgebildet, mit der die Hilfsklappe 34 entlang Rollen 36 eines abgewinkelten Endteils 37 dieses Endes des Düsengehäuses 3 bei äußerer Expansionswinkelverstellung verstell- bzw. längenänderungskompensatorisch verfahrbar sein soll. Bezüglich des erwähnten Ausführungsbeispiels nach Fig. 6 kann ein besonderes Verstellsystem vorgesehen sein, das an die Hilfsklappe 34 drehbeweglich angreift, und zwar gegebenenfalls als Ersatz eines an die betreffende äußere Sekundärklappe 2 drehbeweglich angreifenden Klappenverstellsystems.

Erfindungsgemäß kann ferner zwischen dem oberen äußeren Ende des Düsengehäuses 3 und der Expansionsrampe 11 eine Einblasevorrichtung 39 für die Zufuhr beispielsweise triebwerkseinlaufseitig angesaugter Luftgrenzschicht vorgesehen sein. Wie später noch näher verdeutlicht und veranschaulicht, kann eine derartige Lufteinblasung vorteilhaft u.a. in einem Betriebszustand angewendet werden, der die Zuschaltung des Nachbrenners während der Startphase bzw. Start-Steigflugphase beinhaltet. Auf diese Weise besteht die Möglichkeit, den Schubstrahl bezüglich seines Außenkonturverlaufs gegenüber der Richtung des Verlaufs der Expansionsrampe einzugrenzen, so daß die Expansionsrampe 11 nicht zu nennenswerten Schubverlusten in dieser genannte Betriebsphase führt. Außerdem können durch die genannte Luftgrenzschichteinblasung aerodynamsiche Verluste verringert werden, die gegebenenfalls aus einem örtlich oberen Heißgasströmungsabriß an der Düse resultieren können. Die zuvorgenannte Grenzschichtlufteinblasung ist u.a. in Fig. 1 sowie in Bild 2a durch den Pfeil U verdeutlicht.

Wie ferner u.a. in Fig. 1 dargestellt, besteht die dortige Einblasevorrichtung 39 aus jeweils mittig und Querachsen verschwenkbar angeordneten Klappen 40, wobei aber durchaus auch die Möglichkeit besteht, anderweitige Klappenkonfigurationen vorzusehen, die beispielsweise endseitig verschwenkbar anzuordnen wären.

In nicht weiter dargestellter Weise können die genannten Klappen 40 über jeweils ein besonderes Antriebssystem verstellbar sein, sie können aber auch in Synchronisation einer oder mehrerer Primär- und/oder Sekundärklappen verstellt werden. Ferner können die genannten Klappen 40 federbelastet und gegen den statischen Druck der Düsenströmung sich selbsttätig öffnend öder schließend angeordnet und ausgebildet sein.

Erfindungsgemäß und in den Zeichnungen nicht weiter dargestellt, kann die betreffende Einblasevorrichtung für die Luftgrenzschicht beispielsweise aber auch jalousieartig ausgebildet sein.

Wie ferner in den Zeichnungen nicht weiter dargestellt, besteht die Möglichkeit in Längsrichtung der Expansionsrampe 11 eine beliebige Anzahl an Einblasevorrichtungen oder -mitteln in beliebig gestaffelten Abständen anzuordnen.

Erfindungsgemäß kann ferner die über die Einblasevorrichtung oder -vorrichtungen aus der Luftgrenzschicht gewonnene Luftströmung zumindest teilweise zur Düsen-, insbesondere Klappenkühlung, verwendet werden.

Es ist ferner eine vorteilhafte erfindungsgemäße Düsenkonzeption vorstellbar, bei der sowohl die obere als auch die untere Sekundärklappe 2,2' jeweils am stromabwärtigen Ende an durch jeweils eigene Verstellsysteme betätigbaren, am Düsengehäuse 3 oben und unten schwenkbar gelagerten Führungsgehäusen 20 axial verfahrbar sowie winkelverstellbar aufgehängt sind, also an Führungsgehäusen wie sie gemäß Fig. 1 sowie 4 und 5 lediglich bezüglich hinterer oberer Aufhängung der Sekundärklappen 2 verdeutlicht sind.

Bei der erfindungsgemäßen Düsenkonzeption ist es ferner vorteilhaft, daß die Primärklappen 1,1' fest angeordnet oder aber fest eingestellt werden können, bei dabei allein gemeinsamer bzw. voneinander unabhängiger Verschwenkungsmöglichkeit der Sekundärklappen 2,2'.

Bei der bisher dargestellten und beschriebenen Schubdüse kann also vorteilhaft mit oberen und unteren Primär- und Sekundärklappen 1,1';2,2' oder aber mit einem z.B. oberen Satz aus Primär- und Sekundärklappen 1,2, mit nur einem für letztere verantwortlichen Verstellsystem, bei z.B. fest eingestelltem oder angeornetem unteren Satz aus Primär- und Sekundärklappen 1',2', eine konvergent/konvergent ausgebildeter Düsenkonturverlauf mit Düsenengststelle am Düsenaustritt bis zu einer konvergent/divergenten Düse mit kleinen bis sehr großen Düsenhalsquerschnitten und kleinen bis sehr großen Divergenzverhältnissen eingestellt werden.

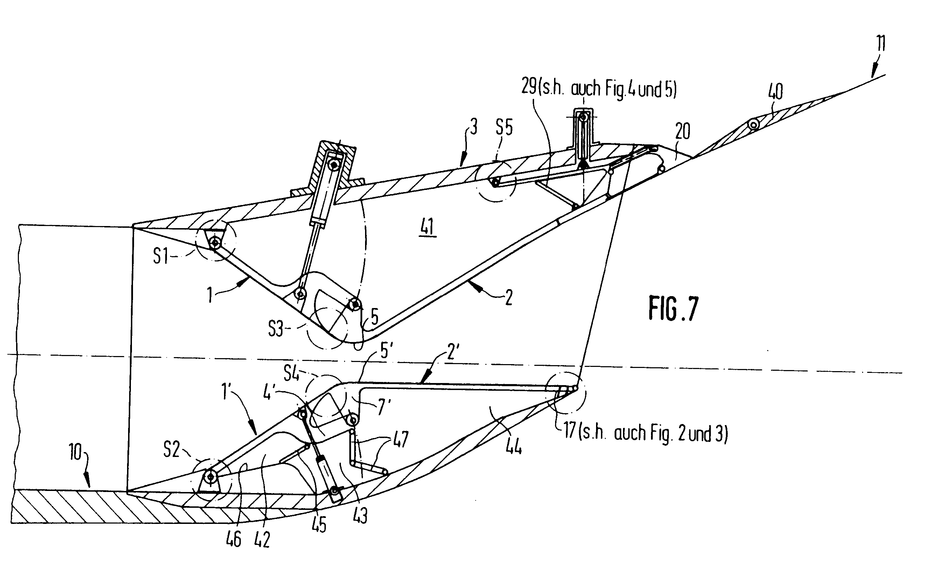

Fig. 7 verkörpert die in Fig. 1 dargestellte Schubdüse, hier jedoch in einer Düsenstellung für den Betrieb in einer vergleichsweisen großen Flughöhe von etwa 30km (Hyperschallflugbetrieb). Dabei ist der kleinstmögliche Düsenhalsquerschnitt zwischen den einander gegenüberliegenden ausgerundeten Flächenabschnitten 5 bzw. 5' der Sekundärklappen 2 bzw. 2' ausgebildet.

Fig. 7 veranschaulicht ferner, daß die oberen und unteren Primär- und Sekundärklappen 1,1';2,2' mit betreffenden Abschnitten des Düsengehäuses 3 gegenüber der Heißgasströmung innerhalb der Düse abgedichtete Druckausgleichskammern 41 bzw. 42,43,44 einschließen können; in den genannten Druckausgleichskammern kann ein Gegendruck zum statischen Druck in der Düsenheißgasströmung aufgebaut werden, um hauptsächlich eine leichte Klappenverstellung, die möglichst wenig Antriebsenergie verbraucht, zu bewerkstelligen. Dabei kann das Düsengehäuse 3 somit auch als Druckgehäuse bezeichnet werden, in dem die entsprechend entlasteten Primär- und Sekundärklappen beweglich angeordnet bzw. ausgebildet sind.

Wie beispielsweise im Hinblick auf die untere Düsenhälfte nach Fig. 7 verdeutlicht, kann also erfindungsgemäß ein im Hinblick auf den längs der jeweiligen Primär- und Sekundärklappen, z.B. 1',2', abnehmenden statischen Druck der Heißgasdüsenströmung angepaßtes, gegeneinander abgedichtetes Mehrkammerdruckausgleichssystem ausgebildet werden. Wie am Beispiel der Fig. 7, unten, verdeutlicht, kann also eine erste Kammer 42 zwischen einem Abschnitt der Primärklappe 1', einer daran verschwenkbaren Dichtplatte 45 und einer gehäuseseitig verankerter statischen Gegenfläche 46 ausgebildet werden; eine zweite Kammer 43 kann zwischen den erwähnten Teilen 46 und 45 sowie Abschnitten der Primärklappe 1' (Sektion 4') und dem Düsengehäuse 3 einerseits sowie einer Primärklappen- und gehäuseseitig drehbar verankerten Kniehebel - Schwenkdichtung 47 andererseits ausgebildet sein; eine dritte Kammer 44 kann zwischen benannter Kniehebeldichtung 47, Abschnitten der Sekundärklappe 2' (Halterungswand 7') sowie Abschnitten des Düsengehäuses 3 und zu Fig. 2 und 3 schon behandelter Dichtklappe 17 am Sekundärklappenende ausgebildet sein. Das zuletzt genannte Mehrkammersystem könnte sinngemäß auf die entsprechende obere Konfiguration aus Primärklappen 1 und Sekundärklappen 2 übertragen werden.

Gemäß Fig. 7 sind ferner an den betreffenden eingekreisten Stellen S1,S2,S3,S4 und S5 geeignete Dichtvorkehrungen gegenüber der Heißgasströmung zu treffen.

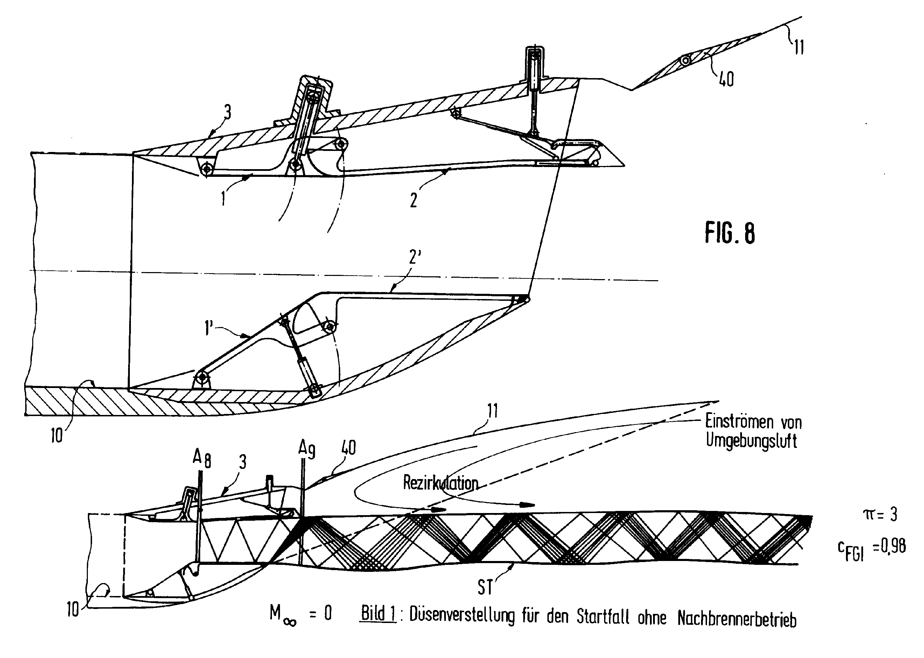

Fig. 8 stellt die Schubdüse aus Fig.1 in der gleichen Klappenstellung nochmals dar, und zwar in der Düsenstellung für den Startfall ohne Nachbrennerbetrieb, jedoch insbesondere in Kombination mit Bild 1, worin die Schubdüse nach Fig.1 und 8 in der gleichen Stellung verkleinert wiedergegeben ist unter Verdeutlichung der zugehörigen und eingestellten Düsenhalsquerschnittsfläche $A_8$ und der Düsenaustrittsfläche $A_9$. ST kennzeichnet den Schubstrahlverlauf, verdeutlicht durch die Mach'schen Linien mit freien Strahlgrenzen. In dieser Betriebsphase bildet sich aus angesaugter Umgebungsluft eine Rezirkulationsströmung R zwischen der fluggeräteseitigen Expansionsrampe 11 und dem oben äußeren Verlauf des Schubstrahls ST aus. Die Klappen 40 sind in dieser Phase in der Verschließstellung. Dabei ist Flugmachzahl $M_\infty$ =0, das Düsendruckverhältnis $\pi$ =3 ; der Wert $C_{FGI}$ = 0,98 repräsentiert dabei das Verhältnis zwischen dem erzielten Schub und dem maximal durch das anliegende Düsendruckverhältnis erreichbaren Schub. Es ist also

$$\pi = \text{Düsendruckverhältnis} \begin{vmatrix} \text{anliegend:} & \pi & = & Pt_8/P_\infty \\ \text{erreicht:} & \pi & = & Pt_8/P_9 \end{vmatrix},$$

worin mit $PT_8$ der Düsenhalstotaldruck, mit $P_\infty$ der statische Umgebungsdruck und mit $P_9$ der erreichte stati-sche Düsenenddruck bezeichnet sind.

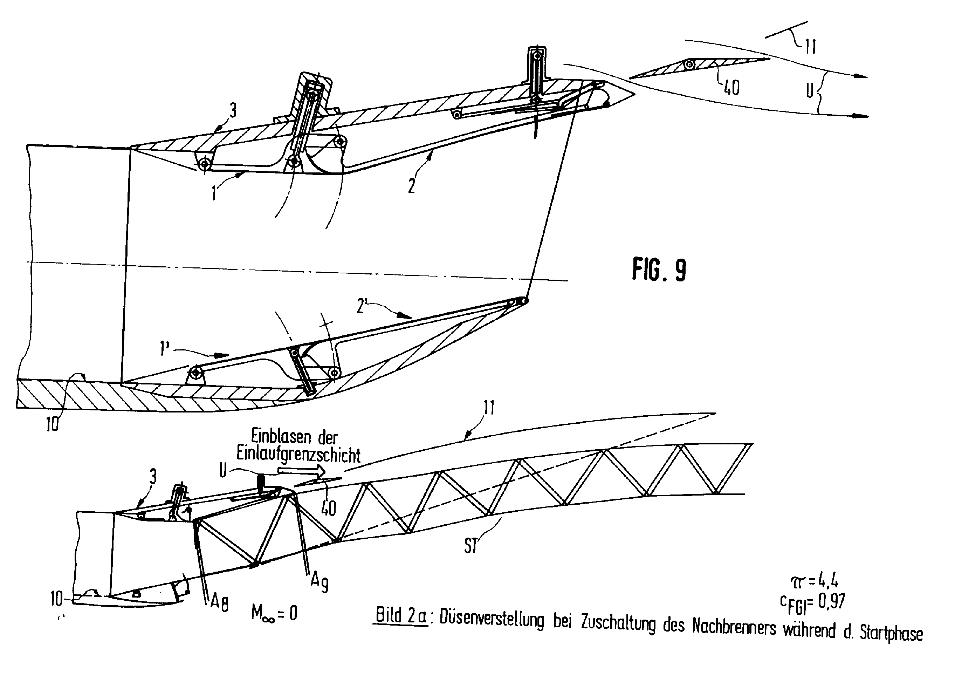

Fig. 9 veranschaulicht die Schubdüse nach Fig. 1 oder8, hier jedoch in einer Klappenstellung, die für die Zuschaltung einer Nachverbrennung während der Flugzeugstart- oder der Start-Steigflugphase repräsentativ ist. Man erkennt aus Fig. 9, daß hierfür die unteren Primär- und Sekundärklappen 1',2' in eine geradlinig flächenbündige Strecklage verschwenkt sind, wobei ein leicht konvergent/divergenter Düsenkonturverlauf in entsprechender Zuordnung der oberen Primär- und Sekundärklappen 1,2 bereitgestellt wird, bei extrem großer Heißgasmassen-Durchsatzfläche (Nachverbrennung) gemäß zugehörigem Bild 2 a ($A_8$). $M_\infty$ ist dabei mit = 0, $\pi$ mit = 4,4 und $C_{FGI}$ mit = 0,97 angeommen. Wie schon eingangs sinngemäß erwähnt, kann in dieser Phase durch entsprechende Öffnung der Klappen 40 durch Einblasen von Einlaufgrenzschicht (Pfeil bzw. Pfeile U) entlang der Expansionsrampe 11 eine äußere Eingrenzung des Schubstrahls ST erreicht werden, bei ansonsten freier unterer Strahlgrenze. $A_9$ repräsentiert in Bild 2a die in diesem Betriebsfall mit der Düsenstellung nach Fig. 9 konforme und verhältnismäßig große Düsenaustrittsfläche.

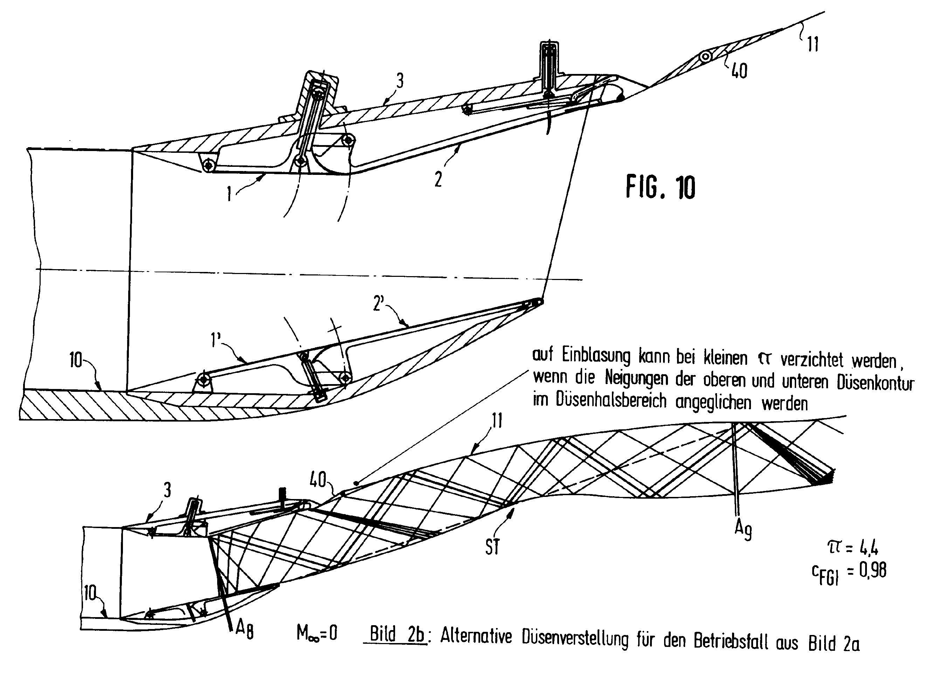

Fig. 10 mit Bild 2b ist eine alternative Düsenstellung für den Betriebsfall aus Fig. 9 mit Bild 2a. Dabei kann gemäß Fig. 10 mit Bild 2b bei verhältnismäßig kleinem Düsendruckverhältnis $\pi$ auf die vormalig erwähnte und aufgezeigte Einblasung U der Einlaufgrenzschicht verzichtet werden, wenn insbesondere gemäß Bild 2b erfindungsgemäß die betreffenden Klappenkonturneigungen im Wege der zugehörigen Konturausbildung des Düsengehäuses vom Düsenhalsbereich aus ($A_8$ - Bild 2b) einander weitestgehend angleichbar sind. Bild 2 b verdeutlicht ferner die gegenüber Bild 2a örtlich verlagerte Düsenaustrittsfläche $A_9$ in Bezug auf die sich gemäß Bild 2b ergebende örtlich äußere feste Strahlgrenze an der Expansionsrampe 11 bei ansonsten, unterer, freier Strahlgrenze des Schubstrahls ST. Für den Betriebsfall nach Fig. 10 mit Bild 2b seien beispielsweise die Werte von $M_\infty$ mit = 0, von $\pi$ mit =4,4 und von $C_{FGI}$ mit = 0,98 zugrundegelegt.

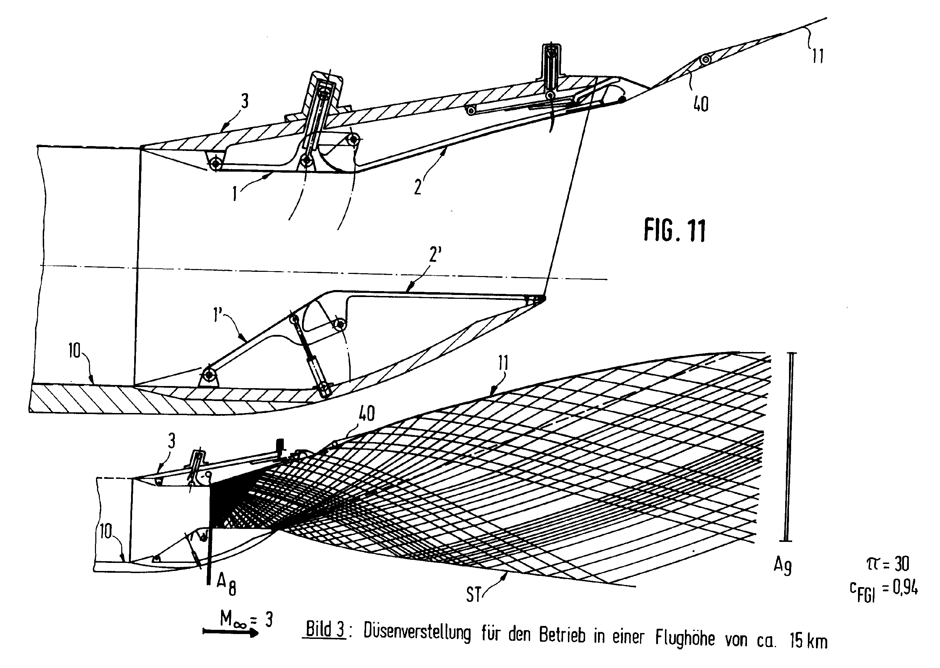

Fig. 11 in Verbingung mit Bild 3 verkörpert eine Düsenstellung, die für einen Flugbetrieb in einer Höhe von etwa 15 km repräsentativ ist. Dabei entspricht der Konturverlauf der oberen Primär- und Sekundärklappe 1 bzw. 2 demjenigen nach Fig. 9 oder gegebenenfalls nach Fig. 10, so daß für die Betriebsphase nach Fig. 11 mit Bild 3 z.B. lediglich die untere Primär- und Sekundärklappe 1' bzw. 2' unter stärkerer Konvergenz (Primärklappe 1') nebst düsenachsparalleler Einschiebung (Sekundärklappe 2') verstellt werden müssen. ST kennzeichnet den entsprechend dieser Betriebsphase weit aufgefächerten Schubstrahl mit fester Strahlgrenze an der Expansionsrampe 11 (heckseitig) des Fluggerätes, mit also schuboptimal vollständig gefüllter Heckfläche des Fluggerätes. $A_8$ kennzeichnet die in dieser Betriebsphase maßgebliche Düsenhalsquerschnittsflächenpo-sition ($A_8$ hier < $A_8$ in Fig. 10 mit Bild 2b bzw. < $A_8$ in Fig.9 mit Bild 2a). In der Betriebsphase nach Fig. 11 mit Bild 3 ist im übrigen die Flugmachzahl $M_\infty$ mit = 3, das Düsendruckverhältnis $\pi$ mit = 30 und $C_{FGI}$ mit = 0,94 angenommen.

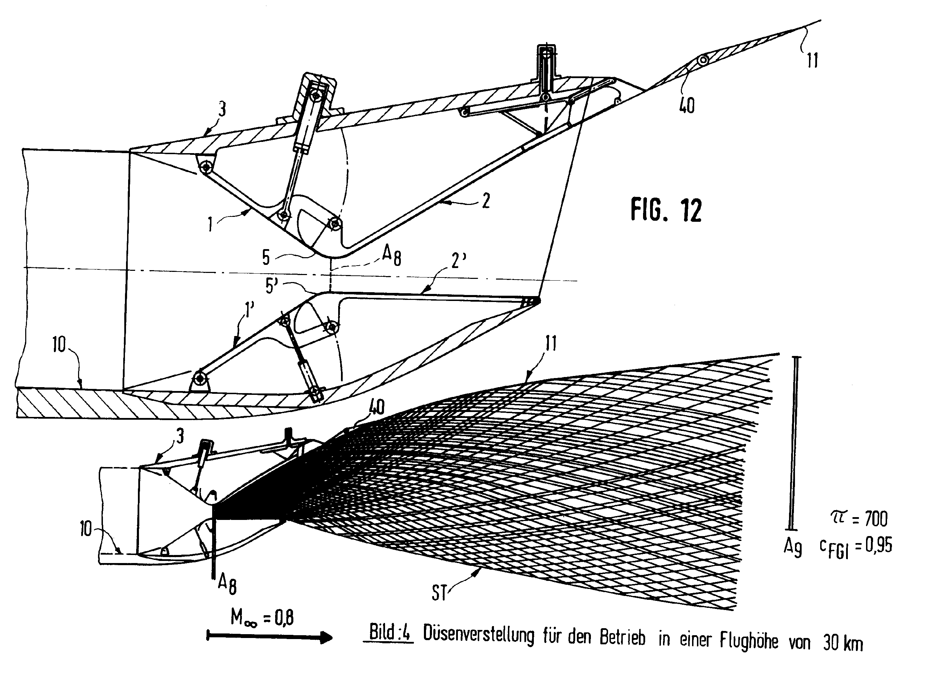

Fig. 12 veranschaulicht die Schubdüse in Stellung gemäß Fig. 7, also für einen Betrieb in einer großen Flughöhe (etwa 30km), wozu unter Beibehaltung der Stellung der unteren Primär- und Sekundärklappe 1' und 2' durch entsprechende Verstellung und Verschiebung der oberen Primär- und Sekundärklappe 1,2 gegen die Düsenachse die kleinstmögliche Düsenhalsquerschnittsfläche zwischen den gewölbten Abschnitten 5,5' (s.h. auch $A_8$ - Bild 4) bereitgestellt wird bei gleichzeitig entsprechender Expansionswinkelanpassung. Der Schubstrahlverlauf ST nach Bild 4 ist demjenigen nach Bild 3 grundsätzlich sehr ähnlich mit den zu Bild 3 schon geschilderten schuboptimalen Eigenschaften, was insbesondere die aerodynamisch günstige und schuboptimale örtlich feste Strahlgrenze und Füllung entlang der Expansionsrampe 11 betrifft. Für die Betriebsphase nach Bild 4 ist eine Flugmachzahl $M_\infty$ von = 6,8, das Düsendruckverhältnis $\pi$ mit = 700 und $C_{FGI}$ mit =0,95 zugrundegelegt.

Bei der Schubdüse nach der Erfindung weisen die Primär- und Sekundärklappen 1,1' bzw. 2,2' einen geradwandigen Verlauf - mit Ausnahme der Flächen 5,5' - auf; erfindungsgemäß können die Düsenklappen jeweils auch einen in Längsrichtung zumindest leicht gekrümmten Verlauf aufweisen.

Nicht nur bei kombinierten luftatmenden Turbinen-Staustrahltriebwerken, sondern z.B. auch bei kombinierten Turbinen-Raketen-Triebwerken kann die Erfindung vorteilhaft eingesetzt werden.

Die Erfindung ermöglicht ferner eine räumlich kompakte Anordnung mehrerer Triebwerke nebst jeweiliger Schubdüse nebeneinander, insbesondere da keine seitlich räumlich ausladenden Verstellsysteme für die Klappen notwendig werden. Dabei wird erfindungsgemäß ferner nur jeweils eine einzige vertikale Gehäusewand zwischen in Querrichtung benachbarten Düsenklappen einer ersten und einer darauf folgenden weiteren Schubdüse benötigt.

**Patentansprüche**

1. Schubdüse mit variablem Verlauf der Düsenkontur für im Unterschall-, Überschall- und Hyperschallbereich betriebene Fluggeräte mit im gegenseitigen Abstand einander gegenüberliegenden oberen und unteren Primär- und Sekundärklappen (1,2;1',2'), die zwischen seitlichen Wandabschnitten eines viereckigen Düsengehäuses (3) abdichtend beweglich geführt sind, worin die Primärklappen (1,1') stromaufwärtig um eine feste Drehachse am Düsengehäuse (3) schwenkbar angeordnet sind und worin die Sekundärklappen (2,2') jeweils stromaufwärtig, an von der Düsenströmung abgewandter Seite befindlichen Drehpunkten (4,4') drehfest mit den Primärklappen (1,1') verbundener Hebel (6) schwenkbar angelenkt sind und mit einem konzentrisch zu den Drehpunkten (4,4') umgebogenen Flächenabschnitt (5,5') in die Primärklappen (1,1') übergehen, und worin die Schubdüse zwischen dem Strahlrohr (10) eines Turbinen- Staustrahltriebwerks und einer radial äußeren Expansionsrampe (11) des Fluggeräts angeordnet ist, dadurch gekennzeichnet, daß
   - die Primär- und Sekundärklappen in einem in sich geschlossenen viereckigen Düsengehäuse (3) angeordnet sind,
   - jeweils die Sekundärklappen (2,2') am stromabwärtigen Ende axial beweglich verfahrbar sowie winkelverstellbar am Düsengehäuse (3) angeordnet sind,
   - die Hebel (6) an von den Primärklappen (1,1') kniehebelartig abgebogenen Innenabschnitten ausgebildet sind, die an den hinteren Enden die Drehpunkte (4,4') aufweisen und die zu den Drehpunkten konzentrische Ausschnitte für die darin einfahrbaren Flächenabschnitte (5,5') der Sekundärklappen (2,2') aufweisen,
   - die oberen und die unteren Primär- und Sekundärklappen (1,1';2,2') durch ein jeweils eigenes Verstellsystem (8,8') verschwenkbar sind, von denen jedes zwischen einem oberen bzw. unteren Wandabschnitt des Düsengehäuses (3) und den Klappen angeordnet ist und dabei an eine Primär- oder Sekundärklappe angreift.

2. Schubdüse nach Anspruch 1, dadurch gekennzeichnet, daß die Sekundärklappen (2,2') jeweils mittels am stromaufwärtigen Ende von den eine gewölbte Düsenflächeneinschnürung ausbildenden Flächenabschnitten (5,5') vorstehender Wandabschnitte (7,7') oder Laschen an den Primärklappen (1,1') zusammen mit letzteren verschwenkbar aufgehängt sind.

3. Schubdüse nach Anspruch 1, dadurch gekennzeichnet, daß das betreffende Verstellsystem (8,8') von hydraulisch oder pneumatisch betätigten Verstellzylindern gebildet ist, die in Querrichtung am oberen bzw. unteren Abschnitt des Düsengehäuses (3) angeordnet sind und deren Kolbenstangen bzw. Hub-Zug-Stangen (9,9') endseitig drehpunktförmig (P,P') an die Primär- oder Sekundärklappen (1,1';2,2') angreifen.

4. Schubdüse nach Anspruch 1, dadurch gekennzeichnet, daß das Düsengehäuse (3), im oberen Bereich, von der Eintritts- nach der Düsenaustrittsseite in richtungsmäßiger Anpassung an den Übergang zur Expansionsrampe (11) geneigt verläuft und, im unteren Bereich, von der Eintrittsseite aus zunächst im wesentlichen geradwandig und dann, von unten außen nach oben innen in Richtung auf den Düsenaustritt eingewölbt verläuft.

5. Schubdüse nach Anspruch 1, dadurch gekennzeichnet, daß vor einer am Düsengehäuse (3) angeordneten kulissenartigen Führungsbahn (16) für eine Rolle (15) einer Sekundärklappe (2') eine Dichtplatte (17) mit ihrem äußeren freien Ende gegenüber einer gehäusefesten Dichtauflage (18) einschwenkbar sowie in letzterer beweglich verfahrbar angeordnet ist.

6. Schubdüse nach Anspruch 1, dadurch gekennzeichnet, daß die Sekundärklappen, insbesondere die obere Sekundärklappe (2), am stromabwärtigen Ende, an einem durch ein eigenes Verstellsystem (19) betätigbaren, am Düsengehäuse (3) schwenkbar gelagerten Führungsgehäuse (20) axial verfahrbar sowie winkelverstellbar aufgehängt ist (sind).

7. Schubdüse nach Anspruch 1 und 6, dadurch gekennzeichnet, daß insbesondere die obere Sekundärklappe (2) mittels an Halterungsmitteln (21) befindlicher Rollen (22) in mindestens eine kulissenartige Führungsbahn (23) des Führungsgehäuses (20) winkelverstellbar sowie beweglich verfahrbar eingreift und am stromabwärtigen Ende eine hinten offene Längsaussparung (24) aufweist, in die eine unterhalb der Führungsbahn (23) am Führungsgehäuse (20) um eine Achse (25) schwenkbare, das freie Klappenende überbrückende Hilfsklappe (26) mit Führungen (27) entlang Rollen (28) bei zunehmender, insbesondere äußerer Expansionswinkelverringerung der Schubdüse, zunehmend tiefer eingefahren ist.

8. Schubdüse nach Anspruch 7, dadurch gekennzeichnet, daß insbesondere die obere Sekundärklappe (2), stromaufwärtig der Halterungsmittel (21) eine daran schwenkbar befestigte Dichtplatte (29) aufweist, die mit ihrem äußeren Ende stets eine am Führungsgehäuse (20) angeordnete plattenartige Dichtauflage (30), unter örtlich darin integrierter Zwangsführung, tangiert.

9. Schubdüse nach Anspruch 1 und 6, gekennzeichnet durch ein gehäuseseitig, insbesondere in den oberen Abschnitt des Gehäuses (3) der Schubdüse integriertes Verstellsystem (19), das mittels mindestens eines zug-druckstangenartigen Verstellglieds (31) beweglich an das Führungsgehäuse (20) angreift (P1).

10. Schubdüse nach den Ansprüchen 1, 3 oder 9, dadurch gekennzeichnet, daß die Verstellsysteme (8;19) zumindest teilweise in außen vom Düsengehäuse (3) zugänglichen und daran lösbar angeordneten hülsenartigen Gliedern (32;33) gelagert sind.

11. Schubdüse nach Anspruch 1, dadurch gekennzeichnet, daß zwischen dem oberen äußeren Ende des Düsengehäuses (3) und der Expansionsrampe (11) eine Einblasevorrichtung (39) für die Zufuhr triebwerkseinlaufseitig abgesaugter Luftgrenzschicht vorgesehen ist.

12. Schubdüse nach Anspruch 11, dadurch gekennzeichnet, daß die Einblasevorrichtung aus mittig oder an einem äußeren Ende schwenkbar angeordneten Klappen (40) besteht, die über ein besonderes Antriebssystem oder in Synchronisation mit der Verstellung einer oder mehrere Primär- und Sekundärklappen verstellbar sind.

13. Schubdüse nach Anspruch 1, dadurch gekennzeichnet, daß in Längsrichtung an der Expansionsrampe (11) eine beliebige Anzahl an Einblasevorrichtungen oder -mitteln für die Zufuhr triebwerkseinlaufseitig abgesaugter Luftgrenzschicht in beliebig gestaffelten Abständen angeordnet ist.

14. Schubdüse nach Anspruch 1, dadurch gekennzeichnet, daß mit oberen und unteren Primär- und Sekundärklappen (1,1';2,2') oder mit einem z.B. oberen Satz aus Primär- und Sekundärklappen (1;2) - mit nur einem Verstellsystem - bei z.B. fest eingestellt angeordnetem unteren Satz aus Primär- und Sekundärklappen (1';2'), ein konvergent/konvergent ausgebildeter Düseninnenkonturverlauf mit Düsenengstelle am Düsenaustritt bis zu einer konvergent/divergenten Düse mit kleinen bis sehr großen Düsenhalsquerschnitten und kleinen bis sehr großen Divergenzverhältnissen einstellbar ist.

15. Schubdüse nach Anspruch 1 und 5, dadurch gekennzeichnet, daß die Primär- und Sekundärklappen (1,1';2,2') mit dem Düsengehäuse (3) ein gegenüber der Heißgasströmung innerhalb der Düse abgedichtetes, aus mehreren gegeneinander abgedichteten Druckausgleichskammern bestehendes Druckausgleichssystem einschließen, worin eine erste Kammer (42) zwischen einem Primärklappenabschnitt, einer daran verschwenkbaren Dichtplatte (45) und einer gehäuseseitig verankerten statischen Gegenfläche (46), eine zweite Kammer (43) zwischen letzteren Elementen sowie Abschnitten der Primärklappe (1') und des Düsengehäuses (3) einerseits sowie einer primärklappen- und gehäuseseitig drehbar verankerten Kniehebel-Schwenk-Dichtung (47) andererseits ausgebildet sind und worin eine dritte Kammer (44) zwischen der Kniehebel-Dichtung (47), Abschnitten der Sekundärklappe (2') und des Düsengehäuses (3) und der Dichtklappe (17) am Sekundärklappenende ausgebildet ist.

## Claims

1. A thrust nozzle with a variable-pattern nozzle contour for subsonic, supersonic and hypersonic aircraft and with, opposite and spaced apart from one another, upper and lower primary and secondary flaps (1, 2; 1', 2'), guided for sealing-tight movement between lateral wall portions of a quadrangular nozzle housing (3), wherein the primary flaps (1, 1') are disposed upstream on the nozzle housing (3) and are pivotable about a fixed axis of rotation and wherein the secondary flaps (2, 2') are on the upstream side articulated at pivot points (4, 4') disposed on the side remote from the nozzle flow to pivot on levers (6) which are rotationally rigidly connected to the primary flaps (1, 1') and have a portion (5, 5') of their surface bent over concentrically with the pivot points (4, 4') and merging into the primary flaps (1, 1'), and wherein the thrust nozzle is disposed between the jet pipe (10) of a turbine ramjet propulsion unit and a radially outer expansion ramp (11) of the aircraft, characterised in that

- the primary and secondary flaps are disposed in a nozzle housing which is closed in itself,
- the secondary flaps (2, 2') at the downstream end are respectively disposed for axial movement and are angularly adjustable on the nozzle housing (3),
- the levers (6) are constructed on inner portions bent away from the primary flaps (1, 1') in the manner of knee levers which comprise the pivot points (4, 4') at the rear ends and, concentric with the pivot points, the cut-outs for the surface portions (5, 5') of the secondary flaps (2, 2') which are adapted to be inserted therein,
- the upper and lower primary and secondary flaps (1, 1'; 2, 2') can each be adjusted by its own adjustment system (8, 8'), each of which is disposed between an upper and a lower portion of the nozzle housing wall and the flaps and engages a primary or a secondary flap.

2. A thrust nozzle according to Claim 1, characterised in that the secondary flaps (2, 2') are respectively suspended by means of flat portions (5, 5') of projecting wall portions (7, 7') or lugs at the upstream end which form a curved constriction of the nozzle area and are pivotable on and together with the primary flaps (1, 1').

3. A thrust nozzle according to Claim 1, characterised in that the relevant adjusting system (8, 8') consists of hydraulically or pneumatically actuated adjusting cylinders which are disposed in the transverse direction on the upper and respectively lower portion of the nozzle housing (3) and of which the piston rods or push-pull rods (9, 9') have their ends shaped like pivot points (P, P').

4. A thrust nozzle according to Claim 1, characterised in that the nozzle housing (3), in the upper part, extends at an angle from the inlet to the outlet side of the nozzle, the direction being adapted to the transition to the expansion ramp (11) and, in the lower part, it extends from the inlet side initially in a straight-walled manner and then in concave fashion from the bottom outwardly and upwardly inwardly in the direction of the nozzle exit.

5. A thrust nozzle according to Claim 1, characterised in that before a slot-like guideway (16) disposed on the nozzle housing (3) and intended for a roller (15) on a secondary flap (2') there is a sealing plate (17) which has its free outer end adapted to pivot in opposite a sealing supporting surface (18) rigid with the housing and is adapted for movement in this latter.

6. A thrust nozzle according to Claim 1, characterised in that the secondary flaps, particularly the upper secondary flap (2), is at the downstream end suspended for axial displacement and angular adjustment on a guide housing (20) which is pivotally mounted on the nozzle housing (3) and adapted to be actuated by its own adjusting system (19).

7. A thrust nozzle according to Claim 1 and 6, characterised in that particularly the upper secondary flap (2) has rollers (22) disposed on supporting means (21) and by which it engages at least one slot-like guideway (23) in the guide housing (20) in angularly adjustable and displaceable fashion and has at the downstream end a rearwardly open longitudinal recess (24) into which an auxiliary flap (26) which bridges the free flap end and is pivotable about an axis (25) on the guide housing (20) beneath the guideway (23) has guides (27) travelling along rollers (28) to increasingly greater depth with increasing particularly an outer reduction of the expansion angle of the thrust nozzle.

8. A thrust nozzle according to Claim 7, characterised in that in particular the upper secondary flap (2) has upstream of the supporting means (21) and fixed in pivotable manner thereon, a sealing plate (29) the outer end of which is constantly tangent upon a panel-like sealing supporting surface (30) and is subject to the action of restricted guidance integrated locally therein.

9. A thrust nozzle according to Claim 1 and 6, characterised by, on the housing side and particularly integrated into the upper portion of the housing (3) of the thrust nozzle, an adjusting system (19) having at least one push-pull rod like adjusting member (31) by which it movably engages the guide housing (20) (P1).

10. A thrust nozzle according to Claims 1, 3 or 9, characterised in that the adjusting systems (8, 19) are mounted at least partly in sleeve-like members (32, 33) which are outwardly accessible from the nozzle housing (3) on which they are separably disposed.

11. A thrust nozzle according to Claim 1, characterised in that between the upper outer end of the nozzle housing (3) and the expansion ramp (11) there is an injecting device (39) for the supply of air interface drawn by suction from the propulsion unit intake side.

12. A thrust nozzle according to Claim 11, characterised in that the injection device consists of flaps (40) disposed centrally or pivotally at an outer end and which are adjustable via a particular drive system or in synchronisation with the adjustment of one or a plurality of primary and secondary flaps.

13. A thrust nozzle according to Claim 1, characterised in that in the longitudinal direction any desired number of injection devices or means for the supply of air interface drawn by vacuum from the propulsion unit intake side are disposed at optionally staggered intervals.

14. A thrust nozzle according to Claim 1, characterised in that with upper and lower primary and secondary flaps (1, 1'; 2, 2') or with a for instance upper set of primary and secondary flaps (1; 2) - with only one adjusting system - or with a permanently adjusted lower set of primary and secondary flaps (1'; 2'), it is possible to adjust a convergent/convergent nozzle in a contour pattern with a nozzle constriction at the nozzle outlet, up to a convergent/divergent nozzle with small to very large nozzle neck cross-sections and small to very large divergence proportions.

15. A thrust nozzle according to Claim 1 and 5, characterised in that the primary and secondary flaps (1, 1'; 2, 2') enclose with the nozzle housing (3) a pressure-equalising system which is sealed in respect of the flow of heated gases inside the nozzle and which consist of a plurality of mutually sealed pressure-compensating chambers, wherein a first chamber (42) is constructed between a primary flap portion, a sealing plate (45) adapted to pivot thereon and a static mating surface (46) anchored on the housing side, a second chamber (43) being constructed between the latter elements and portions of the primary flap (1') and of the nozzle housing (3) on the one hand and a primary flap and knee lever pivot seal (47) rotatably anchored on the housing side on the other and wherein a third chamber (44) is constructed between the knee lever seal (47), portions of the secondary flap (2') and nozzle housing (3) and the sealing flap (17) at the end of the secondary flap.

**Revendications**

1. Tuyère de poussée avec un tracé variable du contour de la tuyère pour des avions utilisés dans la zone subsonique, supersonique et hypersonique avec des volets primaires et secondaires (1, 2 ; 1', 2') supérieurs et inférieurs se faisant vis-à-vis les uns aux autres à distance mutuelle, volets qui sont guidés de façon mobile en assurant l'étanchéité entre des sections latérales de paroi d'un carter rectangulaire de tuyère (3), tuyère dans laquelle les volets primaires (1, 1') sont disposés du côté amont de façon à pouvoir pivoter autour d'un axe de rotation fixe sur le carter de tuyère (3) et dans laquelle les volets secondaires (2, 2'), respectivement en amont, sont articulés de façon à pouvoir pivoter sur des centres de rotation (4, 4') se trouvant du côté situé à l'opposé de l'écoulement de la tuyère, de façon solidaire en rotation avec les leviers (6) reliés aux volets primaires (1, 1') et rejoignant les volets primaires (1, 1') avec une section de surface (5, 5') repliée concentriquement aux centres de rotation (4, 4') et dans laquelle la tuyère de poussée est disposée entre le tube de rayonnement (10) d'un statoréacteur à turbine et une rampe d'expansion (11), extérieure radialement, de l'avion, tuyère de poussée caractérisée en ce que :
   - les volets primaires et secondaires sont disposés dans un carter de tuyère (3) rectangulaire fermé en soi,
   - respectivement les volets secondaires (2, 2') sont disposés de façon à pouvoir se déplacer axialement à l'extrémité en aval du flux et à pouvoir aussi être réglés angulairement sur le carter de tuyère (3),
   - les leviers (6) sont constitués sur des sections intérieures repliées à la manière d'une genouillère à partir des volets primaires (1, 1'), sections qui présentent sur les extrémités arrière les centres de rotation (4, 4') et qui présentent les entailles concentriques aux centres de rotation pour les sections de surface pouvant entrer dedans (5, 5') des volets secondaires (2, 2'),

- les volets primaires et secondaires supérieurs et inférieurs (1, 1'; 2, 2') peuvent pivoter grâce chacun à un système propre de réglage (8, 8'), système dont chacun est disposé entre une section de paroi supérieure ou inférieure du carter de tuyère (3) et les volets et ce faisant vient en prise sur un volet primaire ou secondaire.

2. Tuyère de poussée selon la revendication 1, caractérisée en ce que les volets secondaires (2, 2') sont accrochés respectivement aux volets primaires (1, 1'), de façon à pouvoir pivoter en même temps que ces derniers, au moyen de sections de paroi (7, 7') ou d'attaches faisant saillie à l'extrémité située du côté amont de l'écoulement à partir des sections de surface (5, 5') constituant une entaille voûtée de la surface de la tuyère.

3. Tuyère de poussée selon la revendication 1, caractérisée en ce que le système de réglage correspondant (8, 8') est constitué par des vérins de réglage actionnés hydrauliquement ou pneumatiquement, qui sont disposés dans le sens transversal sur la section supérieure ou inférieure du carter de la tuyère (3) et dont les tiges de piston ou les tiges de levage (9, 9') viennent en prise du côté de l'extrémité en forme de centre de rotation (P, P') sur les volets primaires ou secondaires (1, 1'; 2, 2').

4. Tuyère de poussée selon la revendication 1, caractérisée en ce que le carter de la tuyère (3), dans la zone supérieure, s'étend depuis le côté de l'entrée vers le côté de sortie de la tuyère de façon inclinée en constituant une adaptation au passage vers la rampe d'expansion (11) et, dans la zone inférieure, à partir du côté de l'entrée d'abord essentiellement selon une paroi rectiligne et ensuite de l'extérieur en bas vers l'intérieur en haut de façon voûtée en direction de la sortie de la tuyère.

5. Tuyère de poussée selon la revendication 1, caractérisée en ce qu'on dispose, devant une voie de guidage (16) du type à coulisse disposée sur le carter de la tuyère (3) pour un galet (15) d'un volet secondaire (2'), une plaque d'étanchéité (17) pouvant pivoter par son extrémité libre extérieure par rapport à une semelle d'étanchéité (18) solidaire du carter et pouvant se déplacer sur cette dernière.

6. Tuyère de poussée selon la revendication 1, caractérisée en ce que les volets secondaires supérieurs (2), à l'extrémité aval, en particulier le volet secondaire supérieur (2) est (sont) accroché(s) de façon à pouvoir se déplacer axialement ainsi qu'à pouvoir être réglé angulairement à un carter de guidage (20) pouvant être actionné par un système propre de réglage (19), monté de façon à pouvoir pivoter sur le carter de la tuyère (3).

7. Tuyère de poussée selon la revendication 1 et la revendication 6, caractérisée en ce qu'en particulier le volet supérieur secondaire (2) vient en prise au moyen de galets (22) se trouvant sur des moyens de fixation (21) dans au moins une voie de guidage (23) du type à coulisse du carter de guidage (20), de façon à pouvoir être réglé angulairement ainsi qu'à pouvoir se déplacer et présente à l'extrémité aval un évidement longitudinal ouvert en arrière (24), dans lequel on enfonce de plus en plus profondément un volet auxiliaire (26) en dessous de la voie de guidage (23) sur le carter de guidage (20) de façon à pouvoir pivoter autour d'un axe (25), rejoignant l'extrémité libre du volet avec des galets (28) le long de guides (27) dans le cas d'une diminution croissante de l'angle d'expansion en particulier extérieure de la tuyère de poussée.

8. Tuyère de poussée selon la revendication 7, caractérisée en ce qu'en particulier, le volet secondaire supérieur (2), présente en amont des moyens de fixation (21) une plaque d'étanchéité (29) fixée dessus de façon à pouvoir pivoter, qui par son extrémité extérieure se raccorde tangentiellement de façon permanente à une semelle d'étanchéité (30), ayant la forme d'une plaque disposée sur le carter de guidage (20), en étant guidée localement dedans obligatoirement de façon intégrée.

9. Tuyère de poussée selon la revendication 1 et la revendication 6, caractérisée par un système de réglage (19) intégré du côté du carter, en particulier dans la section supérieure du carter (3) de la tuyère de poussée, système qui au moyen d'au moins un organe de réglage (31) du type d'une tige de levage sous pression vient en prise de façon mobile sur le carter de guidage (20) (P1).

10. Tuyère de poussée selon les revendications 1, 3 ou 9, caractérisée en ce que les systèmes de réglage (8, 19) au moins partiellement sont montés dans des organes en forme de douille (32, 33) accessibles à l'extérieur du carter de la tuyère (3) et disposés de façon démontable dessus.

11. Tuyère de poussée selon la revendication 1, caractérisée en ce qu'entre l'extrémité supérieure extérieure du carter de la tuyère (3) et la rampe d'expansion (11), on prévoit un dispositif de soufflage (39) pour l'alimentation du côté de l'entrée du propulseur de la couche limite d'air aspirée.

12. Tuyère de poussée selon la revendication 11, caractérisée en ce que le dispositif de soufflage consiste en des volets (40) disposés au milieu ou à une extrémité extérieure de façon à pouvoir pivoter, volets qui peuvent être réglés au moyen d'un système d'entraînement particulier ou en synchronisation avec le réglage d'un ou plusieurs volets primaires et secondaires.

13. Tuyère de poussée selon la revendication 1, caractérisée en ce que dans le sens longitudinal, on dispose sur la rampe d'expansion (11) un nombre quelconque de dispositifs de soufflage ou de moyens de soufflage pour l'alimentation du côté de l'entrée du propulseur, de la couche limite d'air aspirée, à intervalles échelonnés à volonté.

14. Tuyère de poussée selon la revendication 1, caractérisée en ce que l'on peut régler avec des volets supérieurs et inférieurs primaires ou secondaires (1, 1' ; 2, 2') ou avec par exemple un jeu supérieur de clapets primaires et secondaires (1 ; 2), avec seulement un système de réglage, dans le cas par exemple d'un jeu inférieur de clapets primaires et secondaires (1', 2') disposé de façon réglée fixe. Un tracé du contour intérieur de la tuyère constitué de façon convergente/divergente avec un étranglement de la tuyère à la sortie jusqu'à une tuyère convergente/divergente avec des sections transversales de col de tuyère de petites à très grandes et avec des taux de divergence de petits à très grands.

15. Tuyère de poussée selon la revendication 1 et 5, caractérisée en ce que les volets primaires et secondaire (1, 1' ; 2, 2') avec le carter de tuyère (3) contiennent un système de compensation de pression rendu étanche par rapport à l'écoulement des gaz brûlants à l'intérieur de la tuyère, consistant en plusieurs chambres de compensation de pression rendues étanches les unes par rapport aux autres, système dans lequel une première chambre (42) est constituée entre une section de volet primaire, une plaque d'étanchéité (45) pouvant pivoter dessus et une contre-surface (46) statique ancrée du côté du carter, une deuxième chambre (43) est constituée entre ces derniers éléments ainsi que des sections du volet primaire (1') et du carter de la tuyère (3) d'une part ainsi que d'un joint d'étanchéité (47) pouvant pivoter à la manière d'une genouillère ancré du côté du volet primaire et du carter de façon à pouvoir tourner et dans lequel est constituée une troisième chambre (44) entre le joint d'étanchéité (47) en forme de genouillère, des sections du volet secondaire (2') et du carter de la tuyère (3) et du volet d'étanchéité (17) à l'extrémité du volet secondaire.

FIG.1

FIG.2

FIG.3

FIG.4

FIG.5

FIG.6

Strömungsrichtung

FIG. 7

FIG. 8

$A_8$  3  $A_9$  40

Einströmen von Umgebungsluft

Rezirkulation

$\pi = 3$

$c_{FGI} = 0.98$

$M_\infty = 0$  Bild 1 : Düsenverstellung für den Startfall ohne Nachbrennerbetrieb

EP 0 454 696 B1

FIG. 9

Einblasen der
Einlaufgrenzschicht

$M_\infty = 0$

$\pi = 4,4$
$c_{FGI} = 0,97$

Bild 2a: Düsenverstellung bei Zuschaltung des Nachbrenners während d. Startphase

EP 0 454 696 B1

**FIG. 10**

auf Einblasung kann bei kleinen $\pi$ verzichtet werden,
wenn die Neigungen der oberen und unteren Düsenkontur
im Düsenhalsbereich angeglichen werden

$\pi = 4,4$
$c_{FGI} = 0,98$

$M_\infty = 0$    Bild 2b: Alternative Düsenverstellung für den Betriebsfall aus Bild 2a

EP 0 454 696 B1

EP 0 454 696 B1

## FIG. 11

$M_\infty = 3$

$\tau = 30$

$c_{FGI} = 0,94$

Bild 3 : Düsenverstellung für den Betrieb in einer Flughöhe von ca. 15 km

FIG. 12

Bild: 4 Düsenverstellung für den Betrieb in einer Flughöhe von 30 km

$\pi = 700$

$c_{FGI} = 0,95$

$M_{\infty} = 0,8$